# EUROPEAN PATENT APPLICATION

(11) **EP 3 133 467 A1**
(43) Date of publication of application: **22.02.2017**
(21) Application number: 15181248.4
(22) Date of filing: 17.08.2015
(51) Int. Cl.: G06F 3/01, G06F 3/038

(54) **UNIVERSAL CONTACTLESS GESTURE CONTROL SYSTEM**

(71) Applicant: Bluemint Labs, 38000 Grenoble (FR)
(72) Inventor: Vijayaraghavan, Narayanan, 38000 Grenoble (FR)
(74) Representative: de Jong, Jean Jacques

(57) **Abstract**

A contactless gesture detector comprises a standard keyboard output interface (20) and a microcontroller (26) programmed to produce standard key codes on the keyboard interface in response to detected gestures. The keyboard interface (20) may be a Bluetooth keyboard interface.

## Description

### Field

The present invention relates to human-machine interfaces, and more particularly to a control system using contactless gestures, i.e. gestures in the air that do not require contact with a surface.

### Background

Portable devices such as smartphones and tablets usually have a touch screen serving as a gesture detector for controlling an application running in the foreground. Exemplary gestures include swiping for browsing through pages in a reader or switching songs in a playlist, pinching outwards and inwards for zooming in and out in an image.

In certain circumstances, such as while cooking or operating in a dirty environment, it is not desirable to touch the screen of the portable device. For this purpose, some portable devices offer contactless gesture detection, responsive to motion of the user's hand in front of the screen. In other circumstances, such as while exercising or driving, it is not handy to search for the portable device for accessing its screen, be it by touching it or moving one's hand in front of it.

To avoid any contact with appliances to control, some companies offer wearable gesture detectors, such as rings or armbands, that communicate wirelessly with the appliance to control, such as via a Bluetooth interface.

PCT patent application WO2015/027089 discloses a gesture detector in the form of an armband that measures muscular activity to identify gestures. Various gestures are identified in the detector itself and mapped to respective "gesture identification flags". The flags are transmitted over a standard wireless interface, such as Bluetooth, to the device to control. The device to control runs specific drivers or enabled software that can interpret the flags and take corresponding actions.

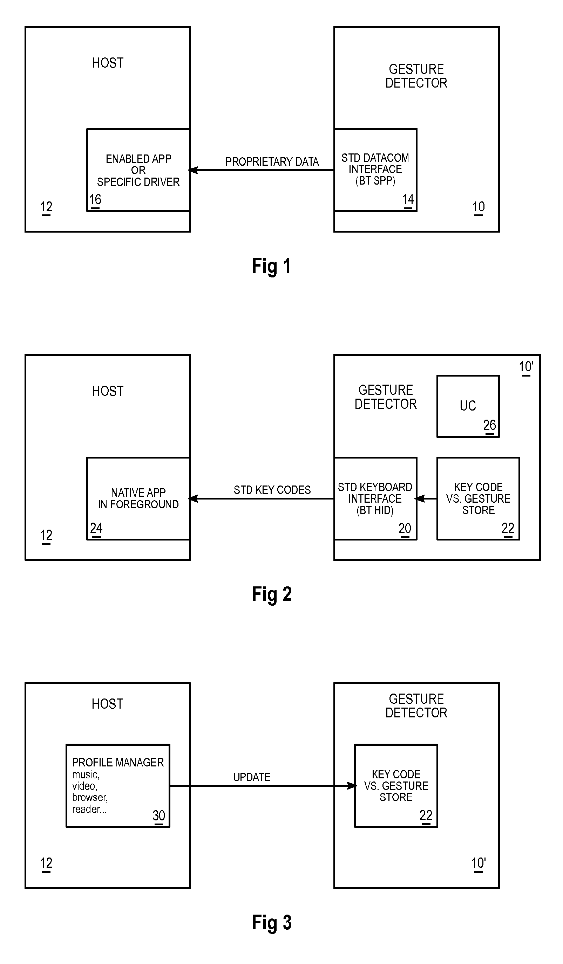

Figure 1 is a block diagram of a conventional generic gesture control system. A gesture detector 10 is connected to a host device to control 12 through a standard communication interface 14. In the context of the above PCT patent application, the interface 14 may be a Bluetooth interface configured to use the Serial Port Profile (SPP) to transmit proprietary data (the gesture identification flags). A specific driver or an enabled application 16 runs on the host device 12 to receive and interpret the identification flags.

In another conventional approach, the gesture detector may transmit raw measured data to the host device, where the driver or the enabled software performs the actual gesture detection and interpretation.

Such gesture detectors are complex and expensive, and users may not wish to wear a relatively cumbersome item, such as while exercising, to control their portable device. They also require the execution of specific drivers or enabled software in the host device to control, for interpreting the data returned by the gesture detector.

### Summary

A contactless gesture detector is provided, which comprises in general a standard keyboard output interface and a microcontroller programmed to produce standard key codes on the keyboard interface in response to detected gestures. The keyboard interface is preferably a Bluetooth keyboard interface.

The gesture detector may comprise three distance sensors arranged to measure distance in a common direction; and the microcontroller configured to combine the distance measures output by the distance sensors to detect gestures along the common direction and gestures parallel to the plane of the distance sensors.

The microcontroller may be programmed to identify a gesture parallel to the plane of the distance sensors by using two distance sensors and identifying a sequence of pairs of distance values produced by the two distance sensors.

The distance sensors may be sensors using single-photon avalanche diodes.

A contactless gesture control method for a host device is provided, comprising the steps of configuring a gesture detector as a standard keyboard peripheral, and producing key codes in response to gestures identified by the gesture detector, the key codes being standard codes recognized by applications running on the host device.

The gesture control method may comprise the steps of running an application in the foreground on the host device, and connecting the gesture detector as a keyboard peripheral to the host device, whereby the application running in the foreground responds to the key codes produced by the gesture detector.

The key codes may be produced through a Bluetooth keyboard interface. The gesture control method may then comprise the following steps carried out in the gesture detector: in the absence of a host device, setting the Bluetooth interface in advertising mode and the gesture detector in power-off state; in the presence of a paired host device, setting the gesture detector in a stand-by proximity detection mode; and upon detecting proximity for longer than a threshold period, setting the gesture detector in power-on state.

The gesture control method may comprise the following steps carried out in the gesture detector: storing a plurality of profiles mapping different sets of key codes to a same set of gestures; using one of the stored profiles as a current profile; displaying the current profile on the gesture detector in response to a specific gesture; and if the specific gesture is repeated within a time-out interval, selecting the next profile as the current profile.

### Brief Description of Drawings

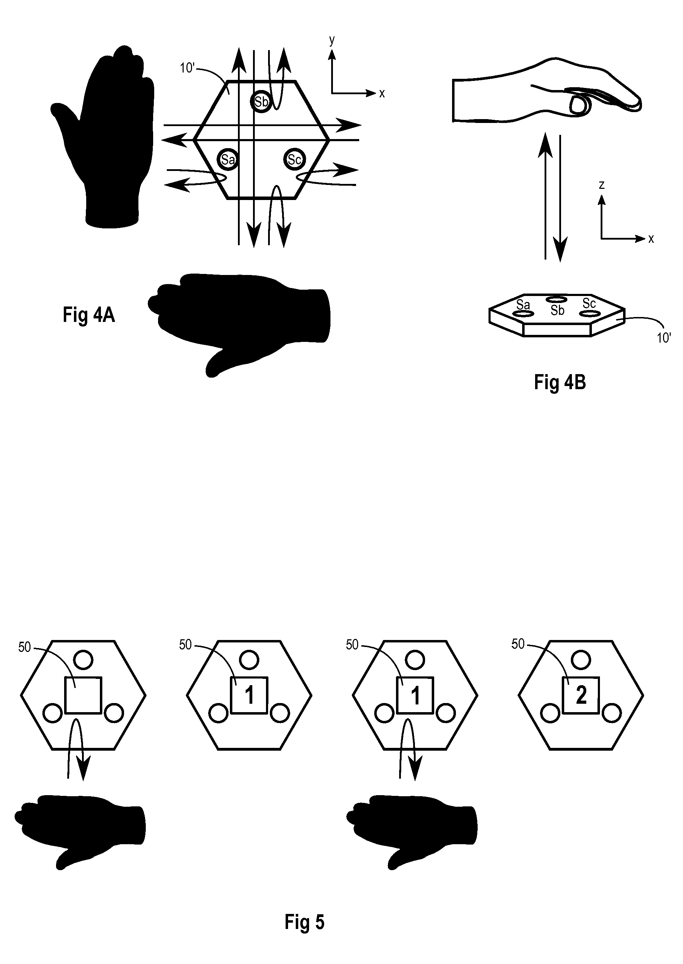

Other advantages and features will become more clearly apparent from the following description of particular embodiments of the invention provided for exemplary purposes only and represented in the appended drawings, in which:
▪ Figure 1 is a block diagram of a conventional generic gesture control system;
▪ Figure 2 is a block diagram of a generic embodiment of a gesture control system using a universal gesture detector;
▪ Figure 3 is a block diagram of the system of figure 2 during a configuration step of the universal gesture detector;
▪ Figure 4A illustrates an embodiment of a universal gesture detector and various gestures in a horizontal plane that may be detected by the universal gesture detector;
▪ Figure 4B illustrates gestures in a vertical plane that may be detected by the universal gesture detector; and
▪ Figure 5 illustrates an exemplary profile change operation for a universal gesture detector.

### Description of Embodiments

Conventional gesture detectors are complex because they are generally designed to offer advanced functions, such as providing accurate three-dimensional motion measures.

In many cases, such as simply listening to music, watching a video, or browsing through pages, advanced functionality may be superfluous. Simple commands such as "next/previous", "play/pause", "increase/decrease volume", etc. are sufficient.

In fact most applications, even if they are intended for touch-screen devices, are designed to also interact with a keyboard - they natively respond to key commands, such as the arrow or scroll keys, or to key combinations. Portable devices are usually also designed to accept a peripheral keyboard, such as via a Bluetooth interface operating in the HID (Human Interface Device) profile.

As a consequence, the most frequently used operations in applications such as players, browsers, presenters and readers can be controlled with a few keys of a standard keyboard.

Based on theses findings, the inventor proposes to provide a gesture detector with a standard keyboard interface and to assign a set of detectable gestures to key codes that existing applications are natively responsive to. Any application running in the foreground on the host device will then respond to the key codes sent over the interface. As a consequence, the gesture detector is universal in that it can connect to existing appliances without hardware modification, and control existing applications without software modification.

Figure 2 is a block diagram depicting a resulting system. The gesture detector 10' includes a standard keyboard interface 20 and stores in 22 a key code to gesture correspondence table. Each time the detector identifies a gesture, the corresponding key code is sent to the host device 12 over the keyboard interface 20. In the host device, a native application running in the foreground 24 captures the key codes and responds to them.

The keyboard interface may be wired, such as using a USB connection, but in most situations, the keyboard interface will be wireless, such as using a Bluetooth HID connection.

The operation of the gesture detector may be managed by a general-purpose microcontroller 26.

A difficulty may lie in the fact that different applications may use different key codes for similar actions. For instance, turning pages in a reader or skipping songs in a player intuitively corresponds to a same swipe gesture, but the reader and the player may not use the same key codes for those actions.

The gesture detector may be designed to store different gestures for the most often used key codes. The user is then burdened with the task of learning the gestures he needs for controlling his preferred applications, where some of the gestures may not be intuitive. The user would be confronted to a similar burden anyway if he intended to use a standard keyboard for controlling the applications.

Figure 3 illustrates a more flexible approach. The key code to gesture mapping 22 may be programmable over the interface through a dedicated profile manager application 30 executed on the host device. The profile manager application stores different key code maps for different applications or categories of applications to control (music, video, browser, reader, presentation, etc.). The user may then select the category in the profile manager prior to using the gesture detector, whereby the profile manager updates the correspondence table 22 in the gesture detector over the interface.

For this purpose, a Bluetooth interface would be used in a data transmission mode, for instance the serial port profile (SPP).

Updating the table 22 could also be achieved through a USB connection. Indeed, the gesture detector may be provided with a USB port that also allows charging an internal battery.

The application profiles may be configurable by the user according to his preferred gestures, and the user may add new profiles.

An alternative approach is to store several profiles, i.e. key code to gesture tables, in the gesture detector and to offer a profile switching functionality from the gesture detector itself, an example of which will be disclosed later.

The gesture detector 10' may be based on any known gesture detection technology. In embodiments disclosed below, the gesture detection technology is simple, so that the detector can be a small flat item. Such a small flat item can be placed almost anywhere or attached to almost anything, and can be carried around conveniently in a pocket.

Figures 4A and 4B illustrate a top view and a perspective view of an embodiment of a gesture detector 10', together with various detectable gestures. The gesture detector may be in the form of a flat pad, shown as hexagonal as an exemplary aesthetic choice. It includes multiple proximity sensors Sa, Sb, Sc, all configured in this embodiment to measure distance in a common direction, here the z-axis orthogonal to the plane of the pad. As shown, three sensors Sa, Sb, Sc may be provided, arranged in an equilateral triangle. The sensors may be based on Single-Photon Avalanche Diodes (SPAD).

Figure 4A illustrates eight hand gestures that can be readily detected by the shown sensor arrangement in the x-y plane. These gestures include four different swipes over the pad (left and right in the x-direction, back and forth in the y-direction), and four incursions over the pad, i.e. a movement from one side of the pad, pausing directly above the pad, and returning to the start position.

Movement direction is determined readily by the order in which the sensors Sa-Sc sense the proximity of the hand. For instance, for a swipe to the right, the left-most sensor Sa will measure a short distance first, while the right-most sensor Sc measures a longer or even infinite distance. When the hand is directly above the pad, all sensors measure a short distance. When the hand leaves the pad continuing the swipe motion, the right-most sensor Sc still measures a short distance while the left-most sensor Sa measures a longer or infinite distance. If "1" designates a short distance measure for a given sensor, for instance a measure below a threshold value, and "0" designates a longer distance measure, for instance a measure above the threshold value, the swipe to the right may be identified by the sequence of pairs of measures (1,0), (1,1), (0,1), where the values of each pair correspond respectively to the sensors Sa and Sc. A swipe to the left would be identified by the sequence (0,1), (1,1), (1,0). An incursion from the left would be identified by the sequence (1,0), (1,1), (1,0). An incursion from the right would be identified by the sequence (0,1), (1,1), (0,1).

The middle sensor Sb is used for detecting motion along the y-axis. For motion along the x-axis, the sensor Sb may be ignored.

In detecting motion along the y-axis, because of the orientation chosen for the sensor triangle, the sensors Sa and Sc play the same role, whereby only one of them, say sensor Sa, may be used in conjunction with sensor Sb. Again, if "1" designates a short distance measure, and "0" designates a longer distance measure, a forward-swipe may be identified by the sequence of pairs of measures (1,0), (1,1), (0,1), where the values of each pair correspond respectively to the sensors Sa and Sb. A backward-swipe would be identified by the sequence (0,1), (1,1), (1,0). An incursion from the front would be identified by the sequence (1,0), (1,1), (1,0). An incursion from the back would be identified by the sequence (0,1), (1,1), (0,1).

The ability to detect the gestures in the x and y directions involves placing the pad with a correct orientation relative to the user. Such an orientation may be indicated to the user with a pictogram drawn on the top surface of the pad.

Figure 4B shows the gesture detector 10' in a configuration for detecting movement of a hand along the z-axis. The hand is placed above the pad such that it covers at least one sensor. The distance measured by the covered sensor varies with the position of the hand along the z-axis, whereby the detector may identify motion through an analysis of the distance variation. In practice, all three sensors will be covered, whereby all sensors will measure approximately the same distance.

The motion of the hand may be accurately tracked in the z-direction, in contrast to motion in the x-y plane, where gestures are more readily determined through binary measurement patterns provided by pairs of sensors. Therefore, motion in the z-direction may be used for sending a key code that is repeated each time the measured distance varies by a step, for adjusting parameters such as an audio volume, a zoom factor, or a position in media content.

The gesture detector may be devoid of buttons. Such a configuration involves using a specific protocol to wake up the detector from a power-off state. Such a protocol may use a Bluetooth interface and a power management circuit in the following manner.

Initially, the gesture detector is in a power-off state. In fact, in this state, the power management circuit remains powered and sets the microcontroller 26 in a deep sleep mode, or turns it off altogether. The Bluetooth interface is configured to operate only in an advertising mode, where it periodically transmits its identifier and expects a pairing request in response.

If no pairing request is received in response to the advertising, the gesture detector remains in this power-off state and consumes very little energy.

A pairing request may be received, for instance, when a previously paired host device comes within the range of the Bluetooth interface.

Upon receiving a pairing request, the power management circuit switches the gesture detector in a stand-by proximity detection mode, for instance powering only one of the three distance sensors Sa-Sc. The power management circuit may be configured to compare the measured distance to a threshold without using the microcontroller, i.e. the microcontroller may remain off, saving power.

In this mode, if the measured distance remains below the threshold for a given time period, for instance three seconds, the power management circuit powers on all functions of the gesture detector.

When fully powered, the gesture detector may expect gestures succeeding at relatively close intervals, say three minutes between gestures. If three minutes elapse after the last detected gesture, the power management circuit may set the gesture detector back in its stand-by proximity detection mode.

In any case, the gesture detector may return to its initial power-off state as soon as the Bluetooth pairing is lost.

From the user's perspective, this protocol has the following effects. When the user brings his paired portable device in range of the gesture detector, or enables Bluetooth communication on his device, the gesture detector switches to its stand-by proximity detection mode. The user, if he wishes to use the gesture detector, first places his hand above the gesture detector for three seconds. The gesture detector then becomes fully operational and responds to the user's subsequent gestures.

When the user has finished with the gesture detector, the gesture detector will eventually return to its stand-by proximity detection mode. If the user wishes to use the gesture detector again, he will again first place his hand for three seconds above the gesture detector.

The gesture detector will return to its power-off state as soon as the user brings his portable device out of range or disables Bluetooth communication on his device.

Figure 5 illustrates an exemplary profile change operation for a button-less universal gesture detector. As previously mentioned, the gesture detector may be designed to store several profiles, i.e. correspondence maps between different sets of key codes and a same set of gestures, among which the user may select a current profile for use.

The user may use a specific gesture for switching profiles, such as the shown incursion from the front. The gesture detector may include an indicator 50 for displaying the current profile.

When the gesture detector is used normally, the indicator 50 is blank. To initiate a profile change, the user may use the specific gesture a first time, as shown on the left. The gesture detector responds by identifying the current profile on the indicator 50, say profile "1". If the user repeats the specific gesture before a time-out interval, the gesture detector switches to the next profile and identifies it on the indicator 50, as shown by number "2". Repeating the specific gesture within a new time-out interval may select the next profile, and so on. If the specific gesture is not repeated within the time-out interval, the gesture detector stores the last selected profile as the current profile, turns off the indicator 50, and returns to its normal operation.

## Claims

1. A contactless gesture detector, comprising:
• a standard keyboard output interface (20); and
• a microcontroller (26) programmed to produce standard key codes on the keyboard interface in response to detected gestures.

2. The gesture detector of claim 1, wherein the keyboard interface (20) is a Bluetooth keyboard interface.

3. The gesture detector of claim 2, comprising:
• three distance sensors (Sa, Sb, Sc) arranged to measure distance in a common direction (z); and
• the microcontroller (26) configured to combine the distance measures output by the distance sensors to detect gestures along the common direction (z) and gestures parallel to the plane (x-y) of the distance sensors.

4. The gesture detector of claim 3, wherein the microcontroller is programmed to identify a gesture parallel to the plane (x-y) of the distance sensors by using two distance sensors and identifying a sequence of pairs of distance values produced by the two distance sensors.

5. The gesture detector of claim 3, wherein the distance sensors are sensors using single-photon avalanche diodes (SPAD).

6. A contactless gesture control method for a host device (12), comprising the steps of:
• configuring a gesture detector (10') as a standard keyboard peripheral; and
• producing key codes in response to gestures identified by the gesture detector, the key codes being standard codes recognized by applications (24) running on the host device.

7. The gesture control method of claim 6, comprising the steps of:
• running an application (24) in the foreground on the host device (12); and
• connecting the gesture detector as a keyboard peripheral to the host device, whereby the application running in the foreground responds to the key codes produced by the gesture detector.

8. The gesture control method of claim 6, comprising producing the key codes through a Bluetooth keyboard interface.

9. The gesture control method of claim 8, comprising the following steps carried out in the gesture detector:
• in the absence of a host device, setting the Bluetooth interface in advertising mode and the gesture detector in power-off state;
• in the presence of a paired host device, setting the gesture detector in a stand-by proximity detection mode; and
• upon detecting proximity for longer than a threshold period, setting the gesture detector in power-on state.

10. The gesture control method of claim 6, comprising the following steps carried out in the gesture detector:
• storing a plurality of profiles mapping different sets of key codes to a same set of gestures;
• using one of the stored profiles as a current profile;
• displaying the current profile on the gesture detector in response to a specific gesture; and
• if the specific gesture is repeated within a time-out interval, selecting the next profile as the current profile.
